# EUROPEAN PATENT APPLICATION

(11) **EP 1 821 204 A1**
(43) Date of publication of application: **22.08.2007**
(21) Application number: 06290300.0
(22) Date of filing: 20.02.2006
(51) Int. Cl.: G06F 9/44, H04L 29/08, G06F 17/30

(54) **A method and a design environment dedicated communication device for IP phone application prototyping**

(71) Applicant: Alcatel Lucent, 75008 Paris (FR)
(72) Inventor: Larvet Philippe, 91470 Forges les bains (FR); Bonnin Bruno, 92160 Antony (FR); Fontaine Patrick, 75013 Paris (FR)
(74) Representative: Brose, Gerhard

(57) **Abstract**

The invention relates to a method for prototyping an application for a dedicated communication device (IPP), to the dedicated communication device (IPP) like an Internet Protocol Phone or a Personal Digital Assistant, and the invention relates to a designing environment (ED/S, C). The method for prototyping an application for the dedicated communication device (IPP) comprising the steps of designing (D) an application using an application designing environment (ED/S, C), the designing environment (ED/S, C) providing a compact set of patterns for control elements, interaction elements, and presentation elements, and of producing an application description (AD) for instructing the dedicated communication device (IPP), where the application description (AD) is declarative representing independent presentation views (screens) that are interlinked and in that the declarative application description (AD) is executed by an interpreter means for interpreting the application description for instructing the dedicated communication device (IPP).

## Description

The invention relates to a method for prototyping an application for a dedicated communication device, the dedicated communication device like an Internet Protocol Phone or a Personal Digital Assistant, and the invention relates to a designing environment.

Software applications, in general, and especially the manifold of target devices have become more and more complex. User interfaces are no exception to this rule, and current trends in user interface design are rapidly evolving. The web, as a vital medium for information transfer, has had an impact on UI design. Although application logic development has become increasingly driven by engineering techniques and principles, the development of the UI has remained "ad-hoc" and thus has resulted - from a software engineering point of view - in applications of poor architectural quality, causing tremendous costs for maintenance and further evolution.

Due to the lack of standards and the current diversity of technologies, no efficient concept for reuse of solutions and designs has been established yet as can be concluded from Gaedke, M., Segor, C. and Gellersen, H. W. (2000). "WCML: Paving the Way for Reuse on Object-oriented Web-Engineering" In Proc. of SAC 2000, Villa Olmo, Como, Italy, pp. 74-77.

To support systematic UI development, a process incorporating a disciplined form of reuse is needed. The lack of methods in UI development motivates to explore the combination of components and patterns as core constituents for a novel reuse approach. Patterns help in the reuse of well-known and proven design solutions, and play a significant role throughout the whole UI development process. Components embody reusable solutions at the implementation level.

The paper "Patterns and Components for Enhancing Reusability and Systematic UI Development" of Daniel Sinnig, Homa Javahey, Peter Forbrig, and Ahmed Seffa, presented at HCl 2005, focuses on unifying patterns and components into one process for user interface (UI) design. The Pattern and Component-Based process for systematic UI development concentrates on the reuse of design and implementation artefacts. It incorporates both patterns and components as its core constituents. Patterns are used as building blocks to establish conceptual UI design models, Components are introduced as a means to implement particular pattern instances. This paper is regarded as closest state of the art.

Considering application design for dedicated communication devices like Internet Protocol (IP) Phones or personal digital assistants (PDA) it remains the problem of deriving an easy inspect-able, easy deployable, and compact application description supporting the above mentioned pattern and component-based process.

This problem is solved by the method according to claim 1, as well as the design environment according to claim 6, and the problem is solved by the dedicated communication device according to claim 11.

The invention is a method comprising the steps of designing an application using an application designing environment, where the designing environment provides a compact set of patterns for control elements, interaction elements, and presentation elements. The application is compiled into an executable application description for instructing the dedicated communication device, where the application description is declarative, representing independent presentation views, i.e. screens, menus, pop-ups etc., that are interlinked. This declarative application description is executed by an interpreter means that is optionally comprised by the dedicated communication device or by an application server hosted somewhere in a network, such that the dedicated communication device is a client of this application server and the application server instructs the dedicated communication device.

The invention is inter alia a designing environment for prototyping an application for a dedicated communication device like an internet Protocol Phone or a Personal Digital Assistant comprising input means, like an editor, preferable WYSIWYG (what you see is what you get) for designing an application, where the input means provide a compact set of patterns for control elements, interaction elements, and presentation elements, and where the designing environment comprises a compiler for compiling the application into an executable application description for the dedicated communication device, where the application description is declarative representing independent presentation views, that are interlinked, and where the application declarative description is executable by an interpreter means that is comprised by the dedicated communication device.

And the invention is a dedicated communication device like an Internet Protocol Phone or a Personal Digital Assistant, the dedicated communication device is controlled by an application description, where the application description is declarative, representing independent presentation views that are interlinked, and where the dedicated communication device comprises an interpreter means for executing the application description.

In other words, the invention is a mechanism for supporting the design and the deployment of an application for such a dedicated communication device. Preferably and advantageously the deployment process is fully integrated meaning that the environment allows to deploy an application to a target device, i.e. finally to the dedicated communication device.

The boundaries of an application are the controls of the dedicated device, i.e. buttons, input devices like designation devices, audio devices, touch displays; and views, i.e. the set of output devices like soft buttons, displays, audio devices, etc. Further boundaries are contexts like states that are commonly represented as variables, i.e. objects showing the state. Such a state could be enumerate like "active" or "down", or showing a certain display content like a pop-up. A further boundary of such an application is the communication network itself and the services provided by the communication network. For instance an application of an IP phone could invoke certain web services to support a user dialog and to execute some specific processes like plane or train reservations, access to private or public information like accounts or addresses, translation, data transformations, etc.

Such an application could be regarded as a glue for presentation, interaction, and network services, i.e. as a glue between device capabilities and boundaries.

To inspect the behaviour of such an application it is advantageous to show in real (i.e. simulated) the behaviour WYSIWYG and to share an application design between several users or between a prototyper and a user. Thus a target description that is working everywhere is favourable. Such a description is preferable a web site using the known techniques for interactive web site application, like Hypertext, Scripting, Active Server Pages (ASP), Pre-processor Hypertext (PHP), Java Applets or Servlets etc.

Of especial importance is that the deployment format, i.e. the application description for the dedicated communication device is condensed, compact, and expressive enough to cope with the application logic. It is advantageous to have a declarative presentation, i.e. a high-level language that describes an application rather than an procedure - it makes use of declarative programming. A declarative programming language says "what", while an imperative programming language says "how". Thus for instance the order of the elements is of lower importance, i.e. derived when interpreted or executed, but the relationship between elements is expressed explicitly.

This allows a compact presentation. And it has the advantage that it is modularly extensible, especially dynamically extendable. Thus broken link errors could be avoided by the interpreter.

Designing an application becomes easy and feasible for non-programmers with the claimed application design environment compared with the mentioned ones. The possibility to process a description of the application in natural, readable language and the storage of the scenarios under the form of structured text, easy to modify, even outside of the Prototyping environment, is a further advantage.

The generation of an HTML file ensures a complete rendering of the application. The generated web site is "stand alone" and able to be executed outside the designing environment on any web browser. And it remains possible to invoke inside an application external web services.

These and other advantages become evident when considering the following description and figures where

Fig 1 shows a dedicated telecommunication device according to the invention.

Fig. 2 shows a design environment for designing an application according to the invention

Fig. 3 shows an exemplary user interface of an editor of a design environment according to the invention.

Fig. 4 shows a set of patterns for control elements, interaction elements, and presentation elements that are used within the method according to the invention.

Fig. 5 shows an input form of an editor of a design environment according to the invention.

Fig. 6 shows real controls of a dedicated telecommunication device according to the invention.

Fig. 7 shows a presentation of relations or transitions between elements of the application description according to the method according to the invention.

The invention will now be described exemplary and illustratively in the context of development and deployment of applications for IP phone applications like Alcatel IP-Touch 4038 or Alcatel 4068, where from a user's perspective the problem is to have an environment allowing the prototyping of such applications and facilitating their development and deployment.

An application for an IP phone or in general for the claimed dedicated device consists advantageously of several screens, logically linked together, denoted in a formal way, like Hypertext documents. Each screen consists of several elements, i.e. parts like control elements, display elements, etc.

A formal description of such a screen itself, preferable in an XML format, for instance is used to denote a screen. The information contained and/or supported by the screen, is presented by display elements like pop-ups, text fields, labels, or even graphics, etc. The description also consists of a logic for calling external services, hence enabling the composition and the service provision. And the description of a screen should be able to provide elements consuming information for and from the screen, i.e. input elements like sliders, forms etc. and service invocations. Of course the description should be able to de-notate links between or to other screens.

The similarity to a description of a web site, i.e. the homomorphism between a web site architecture and an architecture of such an application, allows a descriptive compact declarative (de-)notation.

The main idea of the solution is to propose a complete environment allowing to take into account the description of the application itself, for example by processing a text in natural language or by processing the screens of the application, for example by selecting the screen templates in a graphical screens repository; to populate the screens with the fixed data in an easy way, for example by simply clicking onto the labels to modify them; to link the screens together, for example by clicking onto the action label to be linked with the corresponding screen chosen in a list; to call easily some legacy services, for example by selecting them directly in a list or by identify uniform resource identifier; to populate the screens by the data provided by the external services, for example by using simple keywords like "title", "content", "result", etc.; to re-play the so-obtained scenario, for example through the environment itself, or through an Internet Browser, via a generated HTML file; to deploy the scenario onto e.g. an application server of an IP phone, once it is validated as a prototype by a final user of by pre-sales people.

The claimed design environment is a prototyping tool and a rendering tool that allows to build and save scenarios, where a scenario is a screen sequencing for a communication device like an IP phone. It allows to generate HTML independent files which represent these scenarios and are interactively viewable with a standard Internet browser. The description of an application, i.e. the deployment of a scenario, is preferably made as declarative XML files onto an IP phone or an application server for this IP phone, in order to be interpreted by the server or the phone and to be 'played' on a physical dedicated communication device like an IP phone terminal.

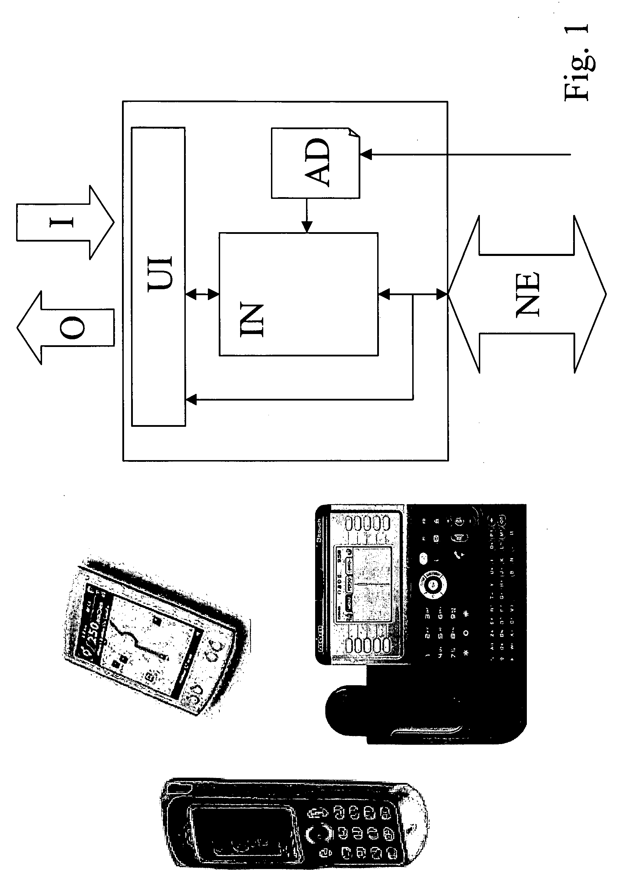

A set of such communication devices is shown pictorial in Fig. 1, left hand side. On the right hand side the structure of a dedicated telephone device is shown. It consists of a user interface UI that copes with the input I, i.e. key strokes, handling, speech etc. and the output O, audio, ringing, rendering, displaying etc. The intelligence behind the user interface means is an application logic that controls the behaviour of the communication device. This logic is denoted and stored as an application description AD. That is a textual declarative presentation of a scenario, the application. This application description is interpreted by interpreter means IN that controls the user interface and the invoked services from a communication network NE.

The telecommunication device is designed to be adaptable to a user's need by allowing to exchange the application description AD, and hence to configure the behaviour, i.e. the screen sequences - the scenario - from extern.

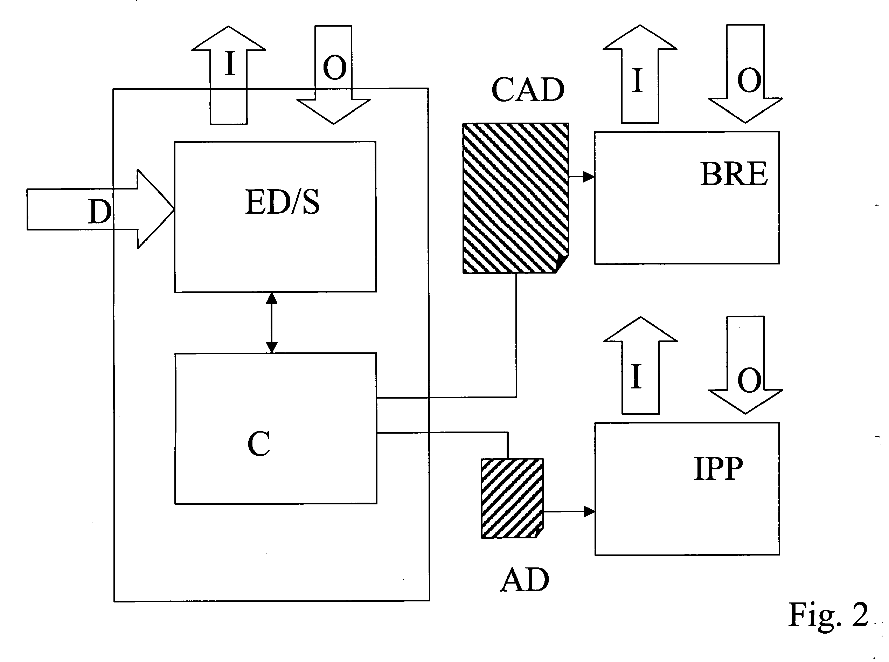

Fig. 2 shows an design environment for designing such a scenario, i.e. an application. The design environment consists of two major components: an editor ED/S and a compiler S. The editor is able to aggregate an application description by composing the elements of such an application and the behaviour. The inputs of a designer D are preferably rendered as on a target communication device, yielding a simulated or emulated input I and output O behaviour. After the design the application is compiled by a compiler C into a target description. This could be for instance a compact declarative XML like application description AD suited for an communication device like an IP phone IPP for controlling there the input I and output O. Or it could be a compiled web site CAD that is rendered in a browser environment BRE, i.e. within a browser session, to simulate the user interface input I and output O. The shown input I and output O should reflect the same behaviour.

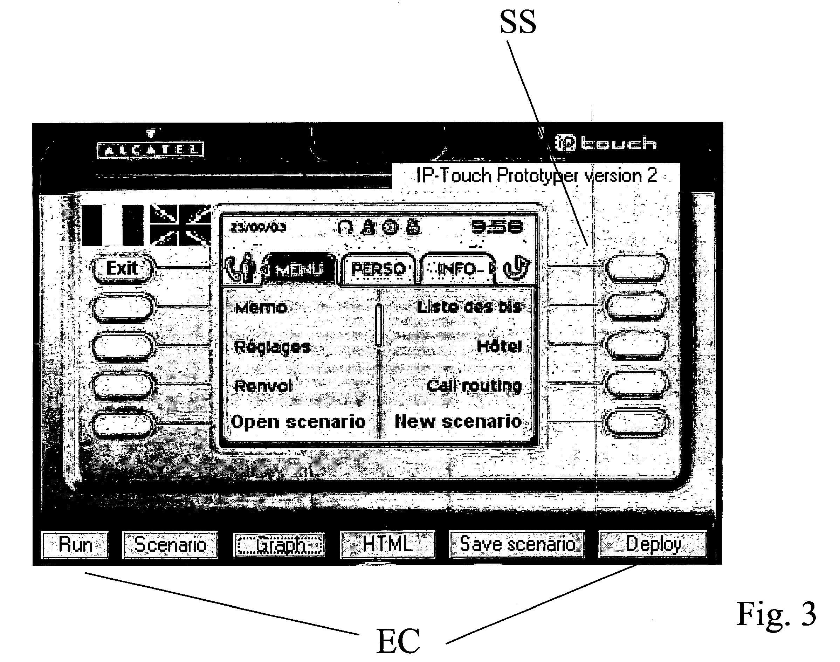

When running the environment a designer of an application is confronted with the environment's capabilities, i.e. with a user interface like the one shown in Fig. 3.

This interface reflects the functionalities of such an environment. There are several editor controls EC shown, e.g. "Run", "Scenario", "Graph", "HTML", "Save scenario", "Deploy", "Open Scenario" and "New Scenario".

"New scenario" creates, executes, and enables a designer to modify or deploy a new scenario. "Open scenario" is to open, execute, modify or deploy an existing scenario.

When opening an existing scenario, a selected scenario is loaded, and the tool switches in a "Run" mode: the first screen of the scenario is displayed. And the designer can immediately trigger (simulate) the scenario by pressing virtual buttons.

A scenario manipulates screens that have their own names, i.e. a scenario could be presented by a list containing names of screens composing the scenario. Each screen can have a screen type that is preferably used in an XML form default name, e.g. according to the following table:

**Table 1**

| Screen type in Fast Prototyper | Corresponding XML Form default name |
|---|---|
| CheckList | FormCheckList |
| Image | FormImage |
| ImageFull | FormImageFull |
| Input | FormInput |
| List | FormList |
| LongText | FormLongText |
| RadioList | FormRadioList |
| Etc. | |

The "Run" button allows you to execute the scenario, even if the scenario is still incomplete, since it is interpreted. This "run" is preferably possible at any time during the creation or modification of a scenario.

The "Scenario" button allows to inspect the internal textual representation of a scenario.

The "Graph" button allows to see graphically the dependencies and the links (in terms of calls) between the screens of your scenario.

The "HTML" button allows to generate the HTML file that represents the scenario. The generated file is immediately render-able with a standard browser.

The "Deploy" button allows to generate the XMUPHP files corresponding to the forms of the scenario and to deploy them on e.g. an application server, from where it can be immediately accessible on the physical IP phone through e.g. the Alcatel Presentation Server.

The "Save scenario" button allows to save the scenario in the current directory as a text file, under a simple symbolic textual form.

An example of this textual form, that is called "application description", under the form of a scenario could look like (the lines beginning by "*" are comments):

* Scenario test
*--------------
Select1:Select; title=Label_title; label_Action1=text1; code_Action1=Text1;
label_Action2=une liste; code_Action2==List1; label Action3=text2;
code-Action3=Text2; label_Action4=une radio liste;
code_Action4=RadioList1; label_Action5=long text;
code_Action5=LongText1; label_Action7=check list;
code_Action7=CheckList1;
Text1:Text; title=UN; text=texte du TEXTE 1; label_Action1=pop;
code_Action1=Popup1; label_Action2=retour; code_Action2=Select1;
label_Action4=deux; code_Action4=Text2;
Text2:Text; title=DEUX; text=texte du TEXTE 2; label_Action2=retour;
code_Action2=Select1; label_Action4=un; code_Action4=Text1;
LongText1:LongText; title=long texte; text=long texte; label_Action2=
retour; code_Action2=Select1;
CheckList1:CheckList; title=titre Check LIST; label_check1=libelle un;
label_check2=libelle deux; label_check3=Check3; label_check4=Check4;
label_check5=Check5; label_Action1=retour; code_Action1=Select1;
List1:List; title=titre liste; index=Text1;

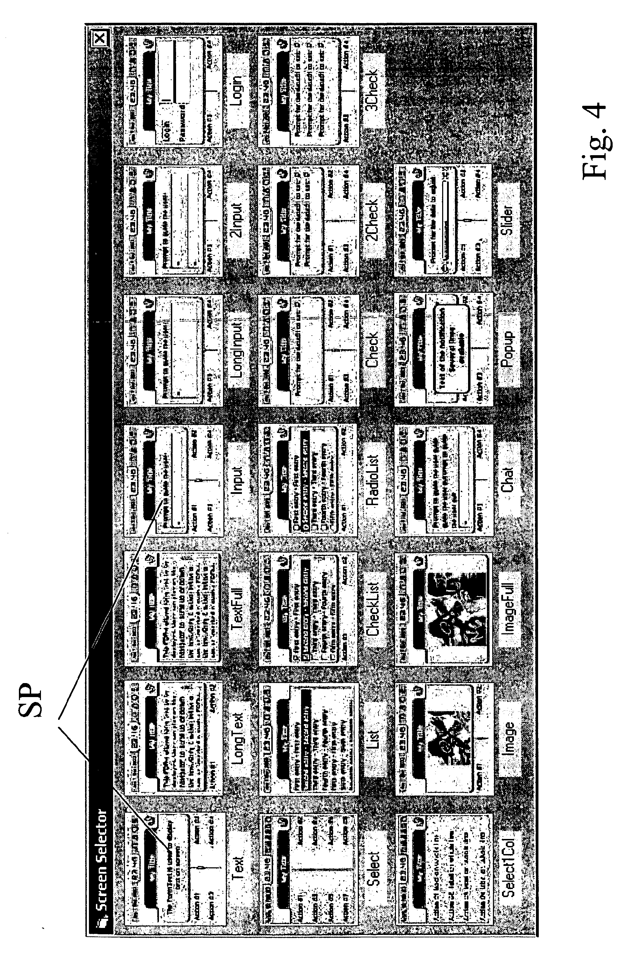

During the creation of a scenario, it is sometimes useful to copy a screen in order to make a "clone", that can be later modified. Creating a new screen by pressing the button "New scenario" preferably suggests a set of screen patterns SP in a screen selector, shown in Fig. 4.

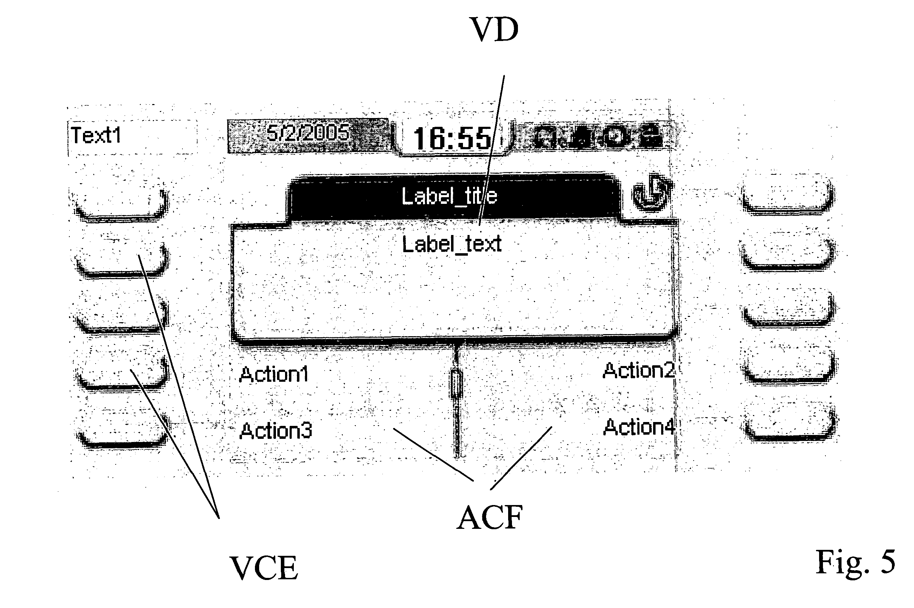

Incrementally at any time during the creation or execution of a scenario, one can add a new screen to a current scenario. By selecting a screen name in the list of existing screens, the screen is immediately displayed on the display area, and the user can build/modify the screen, as shown in Fig 5.

On the displayed screen, one can simply interact as usual by designating and manipulating the element in focus. For example, on a text screen, one can modify the title, the text itself VD and all the four action labels ACF. The virtual buttons VCE, i.e. the virtual controls, could also be attributed with a functionality or a behaviour.

To connect or link two screens together, i.e. a button of a first screen stimulates a second screen named, the two screens have to exist. The first screen has to be selected in this list. When the screen appears on the display area an action label has to be defined for a virtual button where to connect to screen with the link functionality to the second screen.

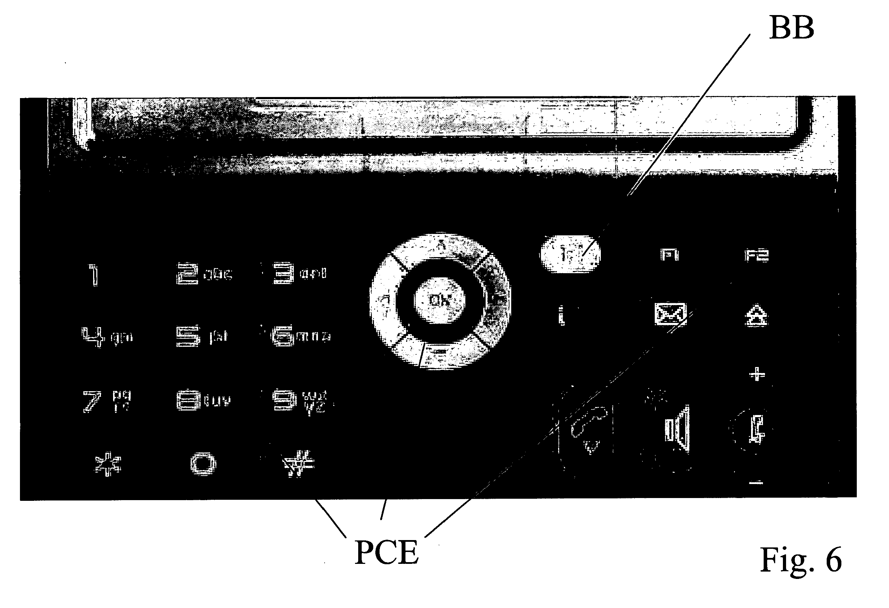

As usual in a browser the user interface and the application should support a backtracking, i.e. a history of screens that are accessible via an back button. Preferably this back button BB is beside the other physical control elements PCE a particular part of the ergonomics of the dedicated communication device, as shown in Fig 6.

It is also preferable to support the metaphor of icons that can be associated to an screen or an control element.

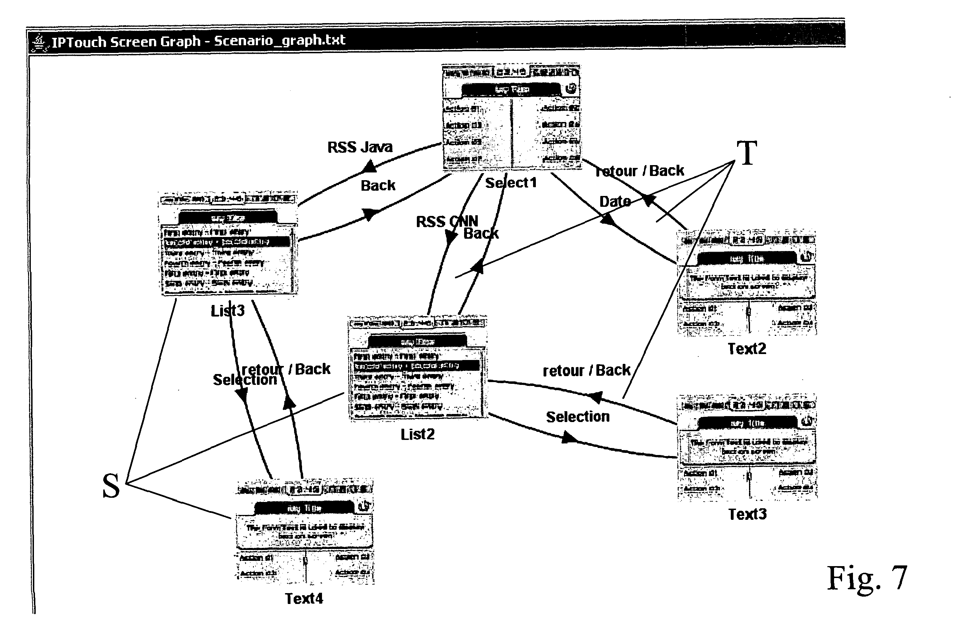

A static (bird's eyes) view of the screen connectivity of a scenario is helpful in application design. The presentation shown in Fig. 7 is derived clicking the "Graph" in the user interface shown in Fig. 3.

The arrows bring the action labels that determine a connection from one screen to another. If several actions lead to the same screen, they are separated by the sign "/".

All interactions for defining a scenario, e.g. creating or deleting a screen could be implemented by choices out from lists. This yields to a lightweight user interface, to an ergonomic design guidance and is perfectly suited for the compilation of an application description.

To stimulate an application the editor has a control, the "Run" button to launch the simulation of the application behaviour, even for incomplete scenarios. Error messages like broken references or undefined elements assist the user in completing the design.

The "HTML" button illustrated the generation capability of a corresponding web site.

The textual form of a scenario, i.e. a declarative description of the application, could look like

* Scenario demo
*--------------
Select1:Select; title=Keep informed Demo; label_Action1 =Date;
code_Action1=Text2; label_Action3=RSS CNN; code_Action3=List2;
label_Action4=RSS Java; code_Action4=List3; label_Action6=exit;
Text2:Text; title=Date du jour; call_WS=http:// xxx.xx.xx.xx/services
/DateService.asmx?wsdl; text=Nous sommes le (result);
label_Action2=retour; code_Action2=Select1; code_Action_back=Select1;
List2:List; title=RSS CNN; index=Text3; call_WS=http://
xxx.xx.xx.xx/services /RSS_Service.asmx?wsdl;
URL=http://rss.cnn.com/rss/cnn_topstories.rss;
code_Action_back=Select1;
Text3:Text; title=Label_title;
call_WS=http://xxx.xx.xx.xx/services/RSS_Service.asmx?wsdl;
URL=http://rss.cnn.com/rss/cnn_topstories.rss; text=(result);
label_Action2=retour; code_Action2=List2; code_Action_back=List2;
List3:List; title=RSS Java titles; index=Text4;
call_WS=http://xxx.xx.xx.xx/services/RSS_Service_asmx?wsdl;
URL=http://developers.sun.com/rss/sdn.xml; code_Action_back=Select1;
Text4:Text; title=Label_title;
call_WS=http://xxx.xx.xx.xx/services/RSS_Service.asmx?wsdl;
URL=http://developers.sun.com/rss/sdn.xml; text=(result);
label_Action2=retour; code_Action2=List3; code_Action_back=List3;

* Scenario Test X500
*--------------------
Select1 :Sefect;title=MyTest
X500;label_Action2=X500;code_Action2=Input1;
Input1:Input;title=Search name; prompt=Enter the name of the
contact;label_Action1=Find;code_Action1=List1;code_Action_back=Select
1;
List1 :List;title=List of contacts;index=Text1;code_Action_back=Input1;
Text1 :Text;title=(name);text=(address) (phone)
(email);label_Action2=back;code_Action2=List1;code_Action_back=lnput1;

The syntax of this description and the fixed functional capability of the available syntactical (application) elements allow to define an application from patterns using a form technique (interview) when creating a scenario.

Preferable there are several packages within the design environment: A HTML generation module provides the HTML generation of a current scenario. A package for forms contains the generic functions used by the forms. And an important compiler module contains the code for converting a scenario into an XML file to allow the connection with the external simulation module. A Graph module provides a graphical view of the scenario (dependencies between the screens) when the user presses the button "Graph". A set of specific functions provide the deployment of the XML/PHP files that are generated when the user presses the button "Depioy".

## Claims

1. A method for prototyping an application for a dedicated communication device (IPP), like an Internet Protocol Phone or a Personal Digital Assistant, the method comprising the steps of
- designing an application using an application designing environment, the designing environment providing a compact set of patterns (SP) for control elements, interaction elements, and presentation elements, and
- producing an application description (AD) for instructing the dedicated communication device,
**characterized in that** the application description is declarative, representing independent presentation views (screens) that are interlinked, and **in that** the declarative application description is readable, editable and expressed in standard characters in a mark-up language compliant format that is executed by an interpreter means for instructing the dedicated communication device (IPP).

2. The method according claim 1, **characterized by** further comprising the step of compiling the application description into a static presentation showing the relations or the transitions (T) between elements of the application description.

3. The method according claim 1, **characterized by** further comprising the step of compiling the application description into a web site presentation (CAD) and the step of inspecting the interrelations between elements by navigating through this web site presentation (CAD).

4. The method according claim 1, **characterized by** further comprising the step of deploying the application description onto an application server and installing the application description at a dedicated application server where the application description is interpreted for instructing the dedicated communication device playing the role of a client with respect to this application server.

5. The method according to claim 4, **characterized in that** the web site is presented using hypertext mark-up language or hypertext pre-processor or active server pages or Java objects.

6. A designing environment for prototyping an application for a dedicated communication device (IPP) like an Internet Protocol Phone or a Personal Digital Assistant comprising input means (ED), like an editor for designing (D) an application, the input means providing a compact set of patterns (SP) for control elements, interaction elements, and presentation elements, and the designing environment processor (C) for producing a declarative application description (AD) for instructing the dedicated communication device (IPP), the application description representing independent presentation views (screens) that are interlinked, and the application declarative description is executable by an interpreter means (IN) for interpreting the application description for instructing the dedicated communication device (IPP).

7. The designing environment according to claim 6, **characterized by** comprising a simulator (S) for simulating the application defined by the application description (AD).

8. The designing environment according to claim 6, **characterized in that** the simulator is a web site (CAD) that is rendered by a web browser, where the web site is generated from the application description.

9. The designing environment according to claim 6, **characterized by** comprising an viewer for visualizing relationships (T) between elements of the application description.

10. The designing environment according to claim 6, **characterized by** comprising a deploying means for deploying the application description onto an application server and installing the application description at a dedicated application server, where the application description is interpreted for instructing the dedicated communication device (IPP) playing the role of a client with respect to this application server.

11. A dedicated communication device (IPP) like an Internet Protocol Phone or a Personal Digital Assistant, the dedicated communication device being controlled by an application description (AP), **characterized in that** the application description is declarative, representing independent presentation views (screens) that are interlinked, and **in that** the declarative application description is readable, editable and expressed in standard characters in a mark-up language compliant format that is executed by an interpreter means for instructing the dedicated communication device (IPP).
